# EUROPÄISCHE PATENTSCHRIFT

(11) **EP 0 327 137 B1**
(45) Veröffentlichungstag und Bekanntmachung des Hinweises auf die Patenterteilung: **08.06.1994**
(21) Anmeldenummer: 89103665.9
(22) Anmeldetag: 06.02.1986
(51) Int. Cl.: A01C 17/00

(54) **Schleuderstreuer**
Fertilizer broadcaster
Distributeur centrifuge

(30) Priorität: 06.02.1985 DE 3503907; 18.09.1985 DE 3533217; 16.11.1985 DE 3540784
(43) Veröffentlichungstag der Anmeldung: 09.08.1989
(62) Teilanmeldung aus: 86101534.5
(73) Patentinhaber: Amazonen-Werke H. Dreyer GmbH & Co. KG, D-49205 Hasbergen (DE)
(72) Erfinder: Dreyer, Heinz, Dipl.-Ing., D-4507 Hasbergen (DE); Wiese, Walter, D-4507 Hasbergen (DE); Lührmann, Johannes, D-4512 Wallenhorst 1 (DE)
(74) Vertreter: Grünecker, Kinkeldey, Stockmair & Schwanhäusser Anwaltssozietät

(56) Entgegenhaltungen:
- DE-A- 1 457 851
- DE-A- 1 459 780
- DE-A- 2 739 733
- GB-A- 2 010 653
- US-A- 2 843 387

## Beschreibung

Die Erfindung betrifft einen Schleuderstreuer, insbesondere für gekörnte Düngemittel, gemäß dem Oberbegriff des Patentanspruchs 1.

Durch die DE-PS 28 18 816 ist ein derartiger Schleuderstreuer bekannt, der sich in der landwirtschaftlichen Praxis bewährt hat. Die am Rahmen dieses Schleuderstreuers in unmittelbarer Nähe der Schieberanordnung angeordnete Anschlageinrichtung ist als Anschlaghebel ausgebildet, der entlang einer Einstellskala schwenkbar und einstellbar an einer die Auslauföffnung aufweisenden Bodenplatte des Vorratsbehälters befestigt ist. Dieser Anschlaghebel bestimmt je nach Einstellung entlang der Einstellskala die Schließstellung und unterschiedliche Öffnungsstellungen der Schieberanordnung. Letztere ist zu diesem Zweck mit einem Verlängerungsstück versehen, das durch Betätigung der Fernbedienungsvorrichtung zur Anlage an den Anschlaghebel bringbar ist. Auf diese Weise kann die Schieberanordnung mit relativ geringem Spiel in die jeweils gewünschte Öffnungsstellung gebracht und damit die Öffnungsweite der Auslauföffnung entsprechend genau eingestellt werden. Allerdings besteht dabei der Nachteil, daß das Verlängerungsstück nicht durch Formschluß, sondern mittels der Fernbedienungsvorrichtung durch Kraftschluß in Anlage an den Anschlaghebel gehalten wird. Ein weiterer Nachteil dieser bekannten Anschlageinrichtung besteht darin, daß sie nicht vom Schleppersitz aus fernbedienbar auf mehrere Öffnungsweiten eingestellt werden kann. Es ist vielmehr erforderlich, daß die Bedienungsperson sich zum Schleuderstreuer begibt und dort den Anschlaghebel manuell entlang der Einstellskala verstellt.

Durch die FR-A-22 34 603 ist eine Fernbedienungsvorrichtung zum Verstellen eines Schiebers eines Schleuderstreuers bekannt. Diese Fernbedienungsvorrichtung umfaßt einen Betätigungshebel und mehrere diesem zugeordnete Rastanschläge zur Festlegung der Schließstellung, der maximalen Öffnungsstellung sowie einiger Zwischenstellungen des Schiebers. Der Betätigungshebel ist über ein Gestänge mit dem Schieber verbunden, so daß die Öffnungsstellung, die durch Einrasten des Betätigungshebels in einen Rastanschlag festgelegt ist, nur mit relativ großem Spiel und entsprechender Ungenauigkeit auf die Schieberanordnung übertragen wird.

Es ist Aufgabe der Erfindung, einen Schleuderstreuer der eingangs genannten Art so weiterzubilden, daß die Schieberanordnung bequem und schnell auch in mehrere Öffnungsstellungen und mit größtmöglicher Genauigkeit einstellbar ist.

Diese Aufgabe wird erfindungsgemäß durch das Kennzeichen des Patentanspruchs 1 gelöst.

Durch die Ausbildung der Anschlageinrichtung als Rasteinrichtung, deren zusammenwirkende Elemente an der Schieberanordnung und am Rahmen des Schleuderstreuers angeordnet sind, wird die Schieberanordnung durch Formschluß nahezu spielfrei in der jeweils eingestellten Öffnungsstellung gehalten. Das Einrasten der zusammenwirkenden Elemente zeigt der Bedienungsperson deutlich und zuverläßig an, daß die Schieberanordnung auf die jeweils eingestellte Öffnungsstellung eingestellt ist. Diese jeweils eingestellte Öffnungsstellung stellt die Grundöffnungsstellung dar, mit der unter den jeweils gegebenen Einsatzbedingungen die jeweils erforderliche Materialmenge ausgebracht wird. Diese Grundöffnungsstellung wird während der gesamten Zeitdauer des jeweiligen Einsatzes beibehalten und somit relativ selten verändert. Es hat sich in der Praxis gezeigt, daß zur Anpassung an die sich während des jeweiligen Einsatzes relativ geringfügig ändernden Bedingungen zwei zusätzliche Öffnungsstellungen, in den die Öffnungsweiten der Auslauföffnung einmal größer und einmal kleiner als in der Grundöffnungsstellung sind, genügen. Diese zusätzlichen Öffnungsstellungen können erfindungsgemäß vom Schleppersitz aus durch die zwei verstellbaren Anschläge festgelegt und mittels des Betätigungshebels der Fernbedienungsvorrichtung jederzeit eingestellt werden.

Vorteilhafterweise umfaßt die Rasteinrichtung zwei zusammenwirkende Rastelemente und ein am Rahmen des Schleuderstreuers zur Festlegung der Grundöffnungsstellung verstell- und einstellbares, mit einem der Rastelemente zusammenwirkendes Arretierelement.

Gemäß einer Ausführungsform der Erfindung ist die Schieberanordnung als Einschieberanordnung mit einem Schieber ausgebildet und eines der beiden Rastelemente an diesem Schieber und das andere am Arretierelement befestigt. Mittels des Betätigungshebels kann der Schieber vom Schleppersitz aus von der Schließstellung in die durch das Arretierelement jeweils festgelegte Grundöffnungsstellung gebracht werden, in welcher sich die am Schieber und am Arretierelement befestigten Rastelemente im sicheren Eingriff miteinander befinden. Zum Ausbringen einer gegenüber der Grundöffnungsstellung größeren oder kleineren Ausbringmenge kann der Schieber ebenfalls vom Schleppersitz aus mittels des Betätigungshebels in eine der beiden zusätzlichen Öffnungsstellungen gebracht werden, die durch die mit dem Betätigungshebel zusammenwirkenden Anschläge festgelegt sind. Die beiden Anschläge und damit die zusätzlichen Öffnungsstellungen können bei Bedarf während der Fahrt verstellt werden. Vorzugsweise umfaßt die Fernbedienungsvorrichtung den Betätigungshebel und ein diesen mit dem Schieber verbindendes Bedienungselement.

Gemäß einer anderen Ausführungsform der Erfindung ist die Schieberanordnung als Doppelschieberanordnung mit einem ersten Schieber und einem zweiten Schieber ausgebildet, die relativ zueinander verstellbar sind und zur Festlegung der Öffnungsweite der Auslauföffnung zusammenwirken, wobei eines der Rastelemente am ersten Schieber und das andere Rastelement am zweiten Schieber befestigt und der erste Schieber in der Grundöffnungsstellung durch das Arretierelement festgelegt ist. Bei eingerasteten Rastelementen werden beide Schieber gemeinsam mittels der Fernbedienungsvorrichtung von der Schließstellung in die durch das Arretierelement jeweils festgelegte Grundöffnungsstellung gebracht, in der sie ebenfalls gemeinsam die entsprechende Öffnungsweite der Auslauföffnung bestimmen. Zur Veränderung der Ausbringmenge wird der zweite Schieber mittels der Fernbedienungsvorrichtung aus dem Rasteingriff mit dem ersten Schieber gebracht und in eine der durch die Anschläge festgelegten zusätzlichen Öffnungsstellungen verstellt. Der Vorteil dieser Doppelschieberanordnung besteht darin, daß der erste Schieber während des gesamten Einsatzes in der Grundöffnungsstellung verbleibt und somit die Grundausbringmenge festlegt und zur Veränderung der Grundausbringmenge lediglich der zweite Schieber um eine vergleichsweise geringe Wegstrecke verstellt wird. Dadurch wird eine wiederholbar sehr hohe Einstellgenauigkeit der Schieberanordnung erzielt.

Vorteilhafterweise ist der Betätigungshebel über das Bedienungselement mit dem zweiten Schieber verbunden und ein zusätzliches Bedienungselement zum Verstellen des ersten Schiebers in die Schließ- und in die Grundöffnungsstellung vorgesehen. Hierbei kann das an den Betätigungshebel angeschlossene Bedienungselement als Bowdenzug ausgebildet sein. Ein solcher Bowdenzug hat den Vorteil, daß er bei Bewegung in einer Richtung praktisch toleranzfrei arbeitet und außerdem den spürbaren Ruck beim Einrasten der Rastelemente bis zu den Betätigungshebeln überträgt. Auf diese Weise wird dem Landwirt angezeigt, wenn der zweite Schieber die Grundöffnungsstellung erreicht hat. Um auch bei nicht eingerasteten Rastelementen eine gemeinsame Bewegung des ersten und des zweiten Schiebers von der Schließ- in die Grundöffnungsstellung und zurück zu ermöglichen, kann der an den Betätigungshebel angeschlossene Bowdenzug mit seinem Seil am zweiten Schieber angeschlossen und über seine Hülle am ersten Schieber abgestützt sein.

Vorzugsweise ist das Arretierelement mit einem Anschlagbolzen ausgebildet, an dem der erste Schieber in der Grundöffnungsstellung anliegt, beispielsweise mittels eines Verlängerungsstückes.

Vorteilhafterweise ist das Arretierelement an der die Auslauföffnung enthaltenden Bodenplatte des Schleuderstreuers angeordnet. Hierbei kann das Arretierelement als Arretierhebel an der Bodenplatte schwenkbar, aber auch als ein in einem Langloch der Bodenplatte verschiebbarer Arretierblock ausgebildet sein.

Vorzugsweise sind die Rastelemente als eine V-förmige Rastkerbe und ein Rastbolzen ausgebildet. Hierbei kann die V-förmige Rastkerbe etwa im mittleren Bereich eines Langloches ausgebildet sein. Vorteilhaft ist eine Ausbildung, gemäß welcher das Langloch in einem Kunststoffelement ausgebildet ist und im Bereich der Rastkerbe eine Höhe aufweist, die kleiner als die Höhe des in das Langloch eingreifenden Rastelementes ist. Bei Betätigung des Betätigungshebels spürt die Bedienungsperson einen größeren Widerstand im Bereich der Rastkerben, wodurch deren Nähe angezeigt wird.

Vorteilhafterweise weist das Langloch eine Länge auf, die die Verstellung der Einschieberanordnung in die Schließstellung und in die maximale Öffnungsstellung ermöglicht. Das Langloch kann aber auch in Schließrichtung der Einschieberanordnung offen sein. Bei der Doppelschieberanordnung weist das Langloch vorzugsweise eine Länge auf, die die Verstellung des zweiten Schiebers in beide maximale zusätzliche Öffnungsstellungen ermöglicht. Die Rastelemente können an Verlängerungsstücken der Schieber angeordnet sein.

Gemäß einer Weiterbildung der Erfindung sind der Betätigungshebel und die Anschläge an einem gemeinsamen Betätigungsblock angeordnet. Dieser Betätigungsblock kann an einer Halterung befestigbar sein, die in dem Bereich, aus dem die Schieberanordnung einsehbar ist, am Schleuderstreuer angeordnet ist. Ferner können die Anschläge unabhängig voneinander einstellbar sein.

Vorzugsweise ist der die kleinste Öffnungsweite der Auslauföffnung festlegende Anschlag derart ausgebildet, daß der Betätigungshebel zur Verstellung bis in die Schließstellung der Schieberanordnung leicht an diesem Anschlag vorbeibewegbar ist. Dabei kann dieser Anschlag leicht in eine Außerfunktionsstellung bringbar sein.

Zur möglichst genauen Einstellung der Schieberanordnung kann der Arretierhebel einen Zeiger aufweisen, dem eine Einstellskala mit linearer Teilung zugeordnet ist. Aus gleichem Grund ist dem ersten Schieber und dem zweiten Schieber der Doppelschieberanordnung vorzugsweise je eine Einstellskala gleicher Teilung zugeordnet.

Anhand einer Zeichnung werden Ausführungsbeispiele nachfolgend erläutert. Hierbei zeigen:
- Fig. 1: einen erfindungsgemäßen Anbauschleuderstreuer in der Ansicht von hinten,

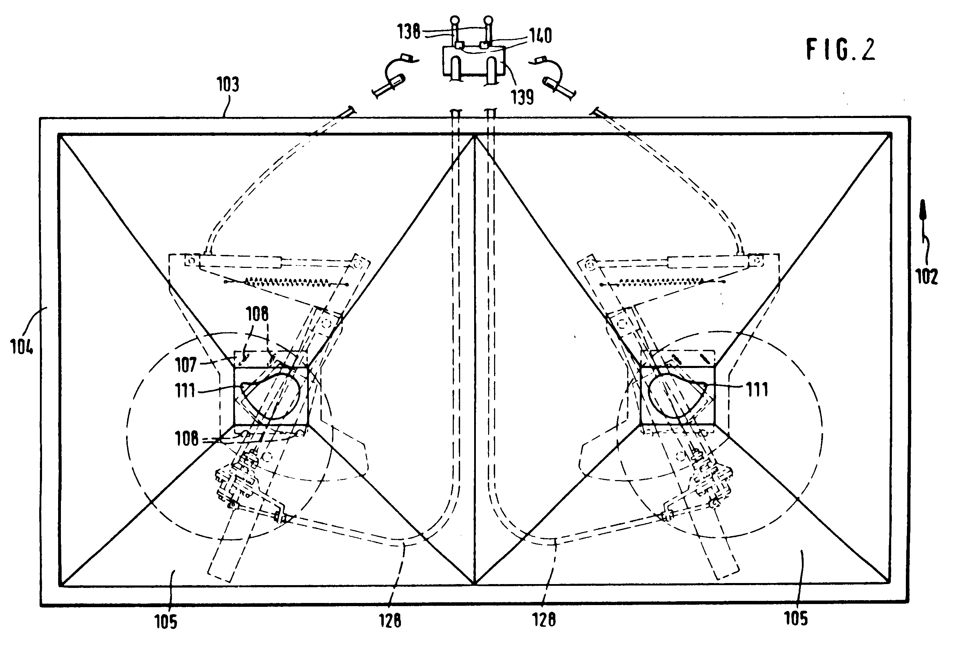

- Fig. 2: den Schleuderstreuer aus Fig. 1 in der Draufsicht und in vergrößertem Maßstab,

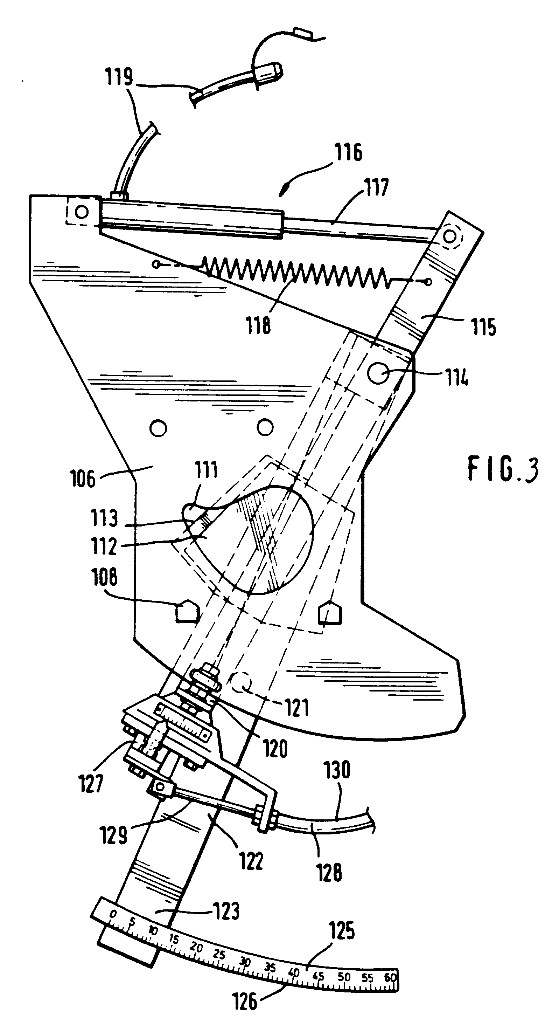

- Fig. 3: die linke Dosiereinheit des Schleuderstreuers aus Fig. 2 in vergrößertem Maßstab und in der Draufsicht,

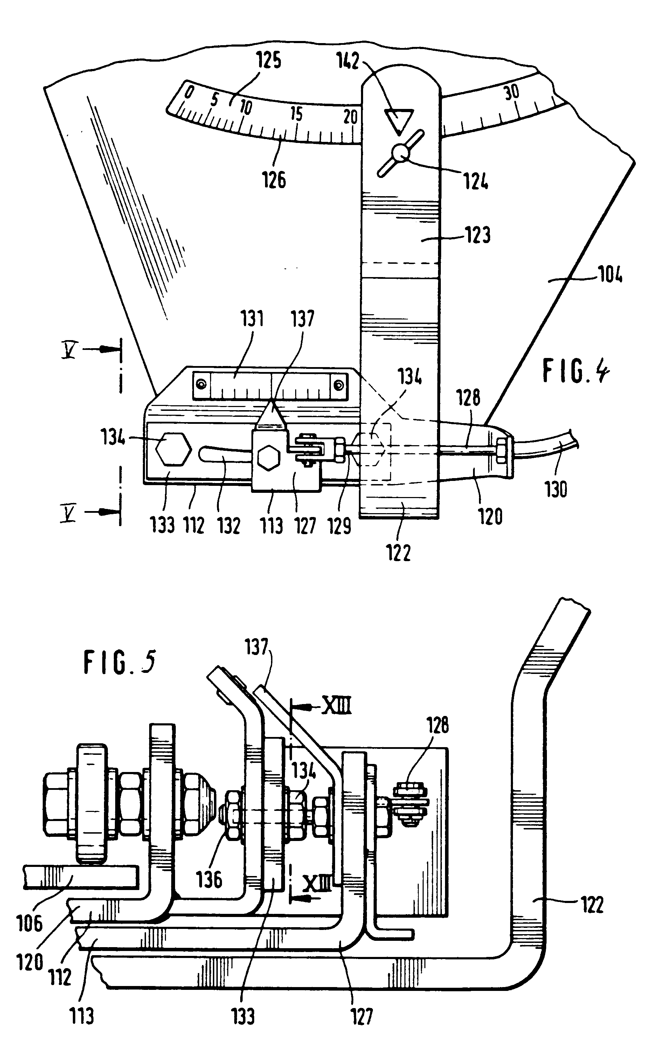

- Fig. 4: die Dosiereinheit gemäß Fig. 3 - an den Schleuderstreuer angebaut - in der Ansicht von hinten,
- Fig. 5: die Anordnung der Schieber in der Ansicht V-V aus Fig. 4,
- Fig. 6: das Kunststoffteil eines Rastelementes der Dosiereinheit in der Ansicht von hinten,
- Fig. 7: das Rastelement in der Ansicht XIII-XIII, wobei die Schieber sich in Grundstellung befinden,
- Fig. 8: das Rastelement in der Ansicht XIII-XIII, wobei ein kleinerer Ausbringmengenwert eingestellt ist,
- Fig. 9: die linke Dosiereinheit eines weiteren Ausführungsbeispieles eines Schleuderstreuers in der Draufsicht,

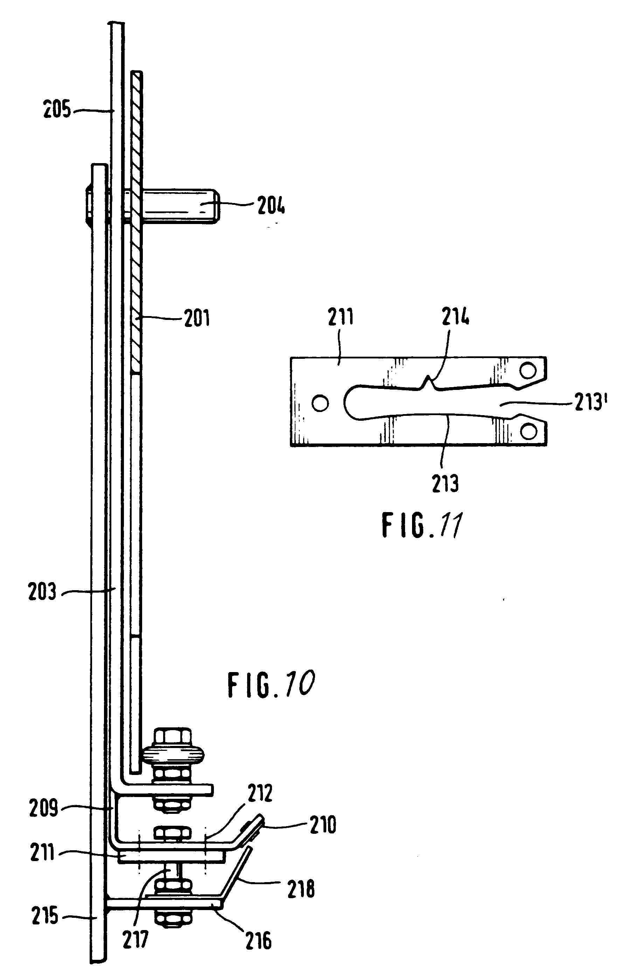

- Fig. 10: die Dosiereinheit gemäß Fig. 9 in der Ansicht X-X,
- Fig. 11: ein Kunststoffteil eines Rastelementes der Dosiereinheit aus Fig. 9, in der Ansicht von hinten,
- Fig. 12: ein Fernbedienungselement zum Betätigen der Schieber, in der Seitenansicht,
- Fig. 13: das Fernbedienungselement gemäß Fig. 12, wobei nur die Hälfte des Betätigungsblockes dargestellt ist, in der Draufsicht,
- Fig. 14: eine andere Ausführung der linken Dosiereinheit eines Schleuderstreuers in der Draufsicht, und
- Fig. 15: ein mit Schrauben an den Boden festklemmbares, einstellbares Rastelement, in der Seitenansicht.

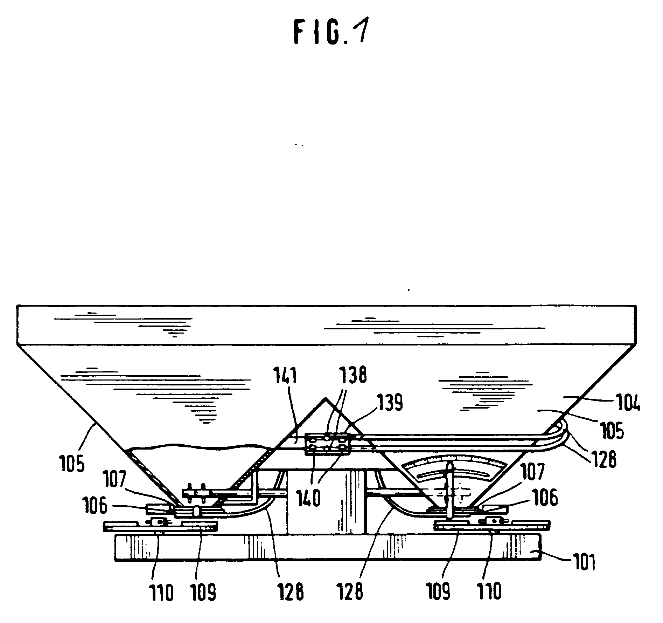

Der Anbauschleuderstreuer gemäß Fig. 1 weist einen Rahmen 101 auf, der auf seiner in Fahrtrichtung 102 vorderen Seite 103 mit nicht dargestellten Kupplungselementen zum Anbau an einen ebenfalls nicht dargestellten Schlepper ausgestattet ist. Ferner ist am Rahmen 101 ein Vorratsbehälter 104 befestigt, der zwei durch ein dachförmiges Mittelteil getrennte trichterförmige Behälterteile 105 aufweist. Die trichterförmigen Behälterteile 105 weisen jeweils eine lösbare Bodenplatte 106 auf, welche an an den Behälterteilen 105 angeschweißten Anschlußelementen 107 mit Schnellverschlüssen 108 befestigt sind. Diese Schnellverschlüsse sind als Haken und Schrauben mit Flügelmuttern ausgebildet. Unterhalb jeder Bodenplatte 106 ist ein als Schleuderscheibe 109 ausgebildetes Verteilorgan angeordnet, das über ein Getriebe 110 von der Schlepperzapfwelle angetrieben wird.
Die Bodenplatten 106 sind als Dosierorgane ausgebildet. In jeder Bodenplatte 106 befindet sich eine Auslauföffnung 111, deren Öffnungsweite durch eine unter der Bodenplatte 106 und vor der Auslauföffnung 111 angeordnete Schieberanordnung bestehend aus einem ersten Schieber 112 und einem zweiten Schieber 113 mittels je einer Fernbedienungsvorrichtung eingestellt werden kann. Unterhalb jeder Bodenplatte 106 sind die beiden Schieber 112 und 113 auf einem Bolzen 114 schwenkbar angeordnet. Direkt unter der Bodenplatte 106 befindet sich der Schieber 112. Unter dem Schieber 112 ist der Schieber 113 angeordnet, so daß sich der Schieber 112 zwischen der Bodenplatte 106 und dem Schieber 113 befindet. Ein Bedienungshebel 115 des Schiebers 112 ragt nach vorn über den Bolzen 114 hinaus. An diesem, über den Bolzen 114 hinausragenden Bedienungshebel 115 ist als Teil der jeweiligen Fernbedienungsvorrichtung ein erstes Bedienungselement 116 angeordnet. Dieses Bedienungselement 116 ist als einfach wirkender Hydraulikzylinder 117 und als dem Hydraulikzylinder 117 entgegenwirkende Zugfeder 118 ausgebildet. Der Hydraulikzylinder 117 und die Zugfeder 118 sind an der Bodenplatte 106 befestigt. Der jeweilige Hydraulikzylinder 117 ist über einen Hydraulikschlauch 119 an die Hydraulikanlage eines Schleppers angeschlossen und kann über Steuergeräte von dort aus vom Schlepperfahrer vom Schleppersitz aus betätigt werden.

Der Schieber 112 weist auf seiner dem Bedienungshebel 115 abgewandten Seite das Verlängerungsstück 120 auf. Dieses Verlängerungsstück 120 liegt an einem Anschlagbolzen 121 eines Arretierhebels 122 an, welcher ein erstes Element einer eine Grundöffnungsstellung der Schieberanordnung 112, 113 festlegenden Rasteinrichtung darstellt. Der Arretierhebel 122 ist ebenfalls auf dem Bolzen 114 schwenkbar gelagert. Der Arretierhebel 122 weist einen nach oben abgebogenen Teil 123 auf. An dem abgebogenen Teil 123 des Arretierhebels 122 ist eine Einstellschraube 124 angeordnet, über der der Arretierhebel 122 an einer am Vorratsbehälter 104 angeschweißten Schiene 125, auf der sich auch eine Einstellskala 126 befindet, festgeklemmt werden kann. An dem Anschlagbolzen 121 des Arretierhebels 122 liegt das Verlängerungsstück 120 des Schiebers 112 an, wenn die Schieber sich in ihrer Öffnungsstellung befinden. Die Einstellskala 126 ist für die Grundeinstellung vorgesehen und weist eine lineare Teilung auf. Anhand dieser Einstellskala kann in Verbindung mit den Werten einer Streutabelle der Arretierhebel 122 mit Anschlagbolzen 121 eingestellt werden.

Der Schieber 113 besitzt einen Bedienungshebel 127, der sich bis über das Verlängerungsstück 120 des Schiebers 112 hinaus erstreckt. Zwischen dem Bedienungshebel 127 des Schiebers 113 und dem Verlängerungsstück 120 des Schiebers 112 ist ein zusätzliches, zweites Bedienungselement 128 in Form eines Bowdenzuges 129, 130 als Teil der Fernbedienungsvorrichtung angeordnet. Hierbei ist das Seil 129 an dem Bedienungshebel 127 des Schiebers 113 befestigt, während die Hülle 130 des Bowdenzuges 128 an dem Verlängerungsstück 120 des Schiebers 112 angeschraubt ist.

An dem Verlängerungsstück 120 des Schiebers 112 ist eine Einstellskala 131 angeordnet. Weiterhin ist in dem aufrechten Stück des Verlängerungsstückes 120 des Schiebers 112 ein Langloch 132 angeordnet. An dem aufrechten Stück des Verlängerungsstückes 120 des Schiebers 112 ist ein Kunststoffteil 133 mit Schrauben 134 befestigt. Das Kunststoffteil 133 weist ebenfalls das Langloch 132 auf. Das Langloch 132 in dem Kunststoffteil 133 weist eine jeweils sich in Richtung der Mitte des Langloches verminderte Breite auf. In der Mitte weist das Langloch 132 auf seiner Unterseite eine V-förmige Rastkerbe 135 als zweites Element der die Grundöffnungsstellung der Schieberanordnung bestimmenden Arretiereinrichtun auf. An dem Verlängerungsstück 127 des Schiebers 113 ist ein Rastbolzen 136 als drittes Element der Rasteinrichtung befestigt, der in das Langloch 132 des Kunststoffteiles 133 hineinragt. Das Langloch 132 des Kunststoffteiles 133 weist in dem Bereich der Rastkerbe 135 eine Höhe auf, die kleiner als der Durchmesser des Rastbolzen 136 ist. Das Kunststoffteil 133 mit dem Langloch 132 bildet in Verbindung mit dem Rastbolzen 136 die Rastelemente, welche die Grundeinstellung der Schieber 112 und 113 zueinander bestimmen, wenn der Rastbolzen 136 sich in der V-förmigen Rastkerbe 135 befindet.

Weiterhin weist das Verlängerungsstück 127 des Schiebers 113 einen Zeiger 137 auf. Dieser Zeiger 137 wirkt mit der Einstellskala 131 zusammen. Diese Einstellskala 131 weist die gleiche Teilung wie die Skala 126 auf, d.h. wenn der Arretierhebel 122 um einen Teilstrich an der Skala 126 verstellt wird, so entspricht dies der Verstellung, als wenn der Schieber 113 um einen Teilstrich gegenüber der Skala 131 verstellt wird.

Der Betätigungshebel 138 der beiden Bowdenzüge 128, wobei jeder Bowdenzug der Dosiereinrichtung einer Schleuderscheibe 109 zugeordnet ist, sind an einem gemeinsamen Betätigungsblock 139 angeordnet. An dem Betätigungsblock 139 sind einstellbare Anschläge 140 angeordnet. An diesen Anschlägen 140 kommen die Betätigungshebel 138 der Bowdenzüge zur Anlage. Diese Anschläge 140 bestimmen die maximale und die minimale Ausbringmenge des Schleuderstreuers. Die Anschläge 140 sind für die beiden Hebel 138 jeweils getrennt und unterschiedlich einstellbar.

Auf der Rückseite des Vorratssbehälters 104 ist an dem Vorratsbehälter 104 eine Halterung 141 angebracht, in die der Betätigungsblock zum Einstellen der maximalen und minimalen Ausbringmenge zu befestigen ist. Hierzu wird der Betätigungsblock 139 in die Halterung 141 eingesteckt. Die Halterung 141 ist somit in einem Bereich angeordnet, aus dem die Schieber 112 und 113 bzw. die Skala 131 und der Zeiger 137 jeweils einsehbar sind. Während des Ausbringes des Düngers auf dem Feld wird der Betätigungsblock 139 auf dem nicht dargestellten Schlepper angeordnet. Weiterhin weist der Betätigungsblock 139 noch Markierungen auf, auf denen die Grundeinstellung sowie die Richtungen angegeben sind, in der die Hebel bewegt werden müssen, wenn eine kleinere oder eine größere Ausbringmenge eingestellt werden soll.

Im folgenden wird die Veränderung der Ausbringmenge pro Flächeneinheit während des Ausbringvorganges sowie das Einstellen eines maximalen und minimalen Ausbringmengenwertes gegenüber einer Grundeinstellung geschildert:
Zunächst stellt der Landwirt anhand der Streutabelle den Arretierhebel 122 so ein, daß der Zeiger 142 des Arretierhebels auf den aus der Streutabelle entnommenen Wert der Skala 126 zeigt. In der eingezeichneten Stellung befinden sich die Schieber 112 und 113 in Betriebsstellung; d.h. in Öffnungsstellung. In dieser beispielhaft eingezeichneten Stellung wird nur ein relativ kleiner Querschnitt der Auslauföffnung 111 freigegeben, so daß eine relativ kleine Ausbringmenge ausgebracht wird. In der Öffnungsstellung liegt der Bedienungshebel 120 des Schiebers 112 an dem Anschlagbolzen 121 des Arretierhebels 122 an. Über den Hydraulikzylinder 117 werden die Schieber 112 und 113 betätigt. Wenn der Hydraulikzylinder 117, wie in dem hier dargestellten Fall drucklos geschaltet ist, zieht die Feder 118 die beiden Schieber 112 und 113 in ihre (eingezeichnete) Öffnungsstellung. Wenn nun der Hydraulikzylinder 117 mit Druck beaufschlagt wird, so wird die Auslauföffnung geschlossen, indem die Schieber in ihre Schließstellung bewegt werden und die Auslauföffnung abdecken. In der Öffnungsstellung liegt das Verlängerungsstück 120 des Schiebers 112, wie oben beschrieben, an dem Anschlagbolzen 121 an.

Um nun ausgehend von dieser Grundeinstellung die maximale bzw. minimale Ausbringmenge über den Schieber 113 verändern zu können und genau einzustellen, wird der Betätigungsblock 139 der Bowdenzüge 128 in die Halterung 141 an der Rückseite des Vorratsbehälters 104 eingesteckt. Anhand der Streutabelle ermittelt der Landwirt, um wieviel Teilstriche der Schieber 113 gegenüber dem Schieber 112 verstellt werden muß, um ausgehend von der Grundeinstellung die maximale und die minimale Ausbringmenge einstellen zu können. Entsprechend der Differenz von Teilstrichen zwischen der Grundeinstellung und der maximalen und der minimalen Ausbringmenge bewegt der Landwirt über den jeweiligen Betätigungshebel 138 des jeweiligen Bowdenzuges 128 den Schieber 113 so lange in Richtung größerer bzw. kleinerer Ausbringmenge, bis die Differenz an Teilstrichen erreicht ist: dieses wird über die Skala 131 in Verbindung mit dem Zeiger 137 eingestellt. Wenn der Schieber 113 über den entsprechenden Betätigungshebel 138 des Bowdenzuges 128 soweit gegenüber dem Schieber 112 verschoben worden ist, daß die maximale bzw. minimale Ausbringmenge gegenüber der Grundeinstellung des Schiebers 112 erreicht ist, wird diese Stellung des Betätigungshebels 138 jeweils durch den entsprechenden einstellbaren Anschlag 140 festgelegt. Durch diese Art der Einstellung des Schiebers 113, daß das Ablesen der Einstellung direkt am Schieber erfolgt und daß die jeweiligen Schieber 113 von dem jeweiligen Bowdenzug 128 immer aus der gleichen Richtung in die maximale Grundeinstellung bewegt werden, wirkt sich das evtl. im Bowdenzug und in den Verbindungsteilen zwischen dem Schieber 113 und dem Betätigungshebel vorhandene Spiel nicht aus. Vielmehr wird es durch diese entsprechende Einstellung ausgeschaltet.

Wenn der Landwirt nun für die beiden Dosierorgane jeweils getrennt und unabhängig voneinander über die Betätigungshebel 138 der Bowdenzüge 128 die jeweilige maximale und minimale Ausbringmenge ausgehend von der Grundausbringmenge eingestellt hat, kann mit dem Ausbringen des Düngers begonnen werden. Um nun vom Schlepper aus jeweils die maximale und minimale Ausbringmenge in bezug auf die Grundeinstellung vom Schleppersitz aus verstellen zu können, wird der Betätigunsblock aus der Halterung 141 herausgenommen und auf dem Schlepper angeordnet.

Dadurch, daß in der Grundeinstellung der beiden Schieber 112 und 113 der Rastbolzen 136 jeweils in die V-förmige Rastkerbe 135 einrastet, was beim Bewegen des jeweiligen Betätigungshebels 138 merklich zu spüren ist, kann der jeweilige Schieber 113 sicher in die Grundeinstellung zurückgestellt werden.

Die beiden Schieber 113, die jeweils einer Schleuderscheibe 109 zugeordnet sind, können über die Betätigungshebel 138 der Bowdenzüge 128 jeweils unabhängig voneinander vom Schleppersitz aus verstellt werden, so daß für jede Schleuderscheibe 109 verschieden große Ausbringmengen pro Flächeneinheit einstellbar sind. Hierzu werden die Schieber 113 gegenüber den Schiebern 112 über die Bowdenzüge 128 derart hin- und herbewegt, daß ausgehend von der Grundeinstellung der Schieber 112 und 113 jeweils ein größerer und ein kleinerer Öffnungsquerschnitt der Auslauföffnung 111 bezüglich der Grundöffnungsweite eingestellt wird. Dadurch, daß die beiden Schieber 113 jeweils unabhängig über die Betätigungshebel 138 der Bowdenzüge 128 verstellt werden können, ist es beispielsweise möglich, daß für die rechte Schleuderscheibe 109 die maximale Ausbringmenge pro Flächeneinheit und für die linke Schleuderscheibe die minimale Ausbringmenge pro Flächeneinheit einstellbar ist. Es ist auch möglich, daß für die eine Schleuderscheibe 109 die Grundausbringmenge eingestellt wird und für die andere Schleuderscheibe 109 die maximale bzw. minimale Ausbringmenge pro Flächeneinheit eingestellt wird.

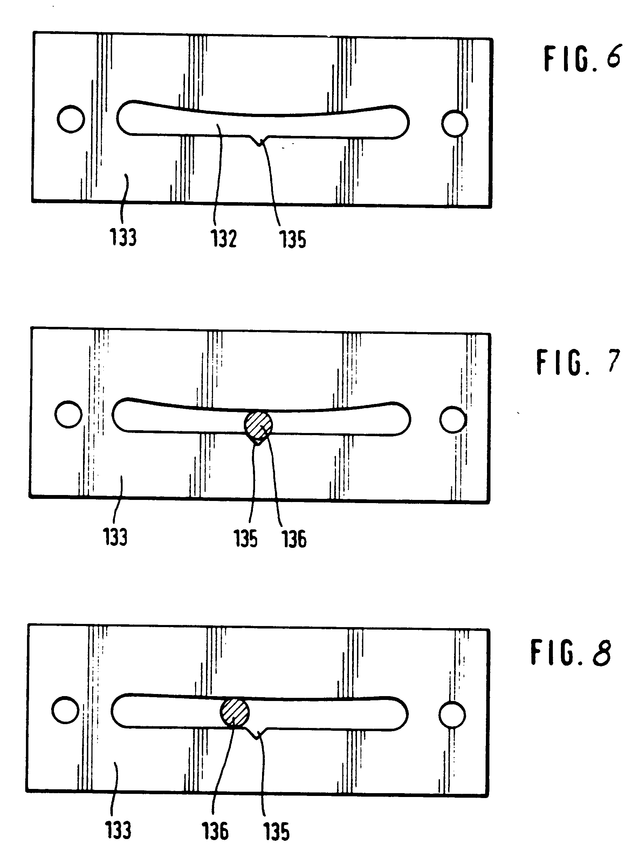

In der Grundeinstellung der Schieber 112 und 113 zueinander befindet sich der Rastbolzen 136 in der V-förmigen Rastkerbe 135 gemäß Fig. 7. Dadurch, daß das Langloch 132 im Bereich der V-förmigen Rastkerbe 135 eine geringere Höhe als der Durchmesser des Rastbolzens 136 aufweist, wird der Rastbolzen 136 durch die Elastizität des Kunststoffteiles 133 in die V-förmige Kerbe 135 gedrückt. Wird nun der Schieber 113 gegenüber dem Schieber 112 verstellt, so wird der Rastbolzen 136 aus der V-förmigen Kerbe 135 herausgedrückt und gleichzeitig wird der obere Teil des Kunststoffteiles oberhalb des Langloches 132 nach oben gedrückt, so daß das Kunststoffteil 133 elastisch verformt wird, wie dieses in Fig. 8 dargestellt ist.

Auf dem Acker werden am Feldende die Auslauföffnungen 111 dadurch geöffnet, daß die Hydraulikzylinder 17 über die auf dem Schlepper befindlichen Steuergeräte drucklos geschaltet werden. Schlagartig ziehen die Zugfedern 118 die jeweiligen Schieber 112 und 113 in ihre eingestellte Öffnungsstellung, so daß das Verlängerungsstück 120 an dem Anschlagbolzen 121 des Arretierhebels 122 anliegt. Wenn der Landwirt nun während der Feldüberfahrt und des Ausbringvorganges aufgrund der vorliegenden Einsatzverhältnisse eine etwas kleinere oder größere Ausbringmenge ausbringen will, so betätigt er den entsprechenden Betätigungshebel 138 des Bowdenzuges 128.

Über diesen Bowdenzug 128 wird dann der Schieber 113 gegenüber dem jeweiligen Schieber 112 bewegt, so daß entsprechend der Verstellung des Betätigungshebels 138 ein kleinerer oder ein größerer Öffnungsquerschnitt gegenüber der Grundeinstellung eingestellt wird. Soll anschließend wieder die eingestellte Grundausbringmenge ausgebracht werden, so bewegt der Landwirt den entsprechenden Betätigungshebel 138 wieder zurück, bis er spürbar am Betätigungshebel merkt, daß der Rastbolzen 136 in die V-förmige Rastkerbe 135 eingerastet ist. Somit ist also der durch den Schieber 113 freigegebene Öffnungsquerschnitt der Auslauföffnung 111 während des Einsatzes des Streuers über den Bowdenzug 128 derart veränderbar, daß jeweils unabhängig voneinander für jede Schleuderscheibe 109 getrennt eine kleinere oder größere Ausbringmenge (Öffnungsweite der Auslauföffnung) unabhängig voneinander einstellbar ist.

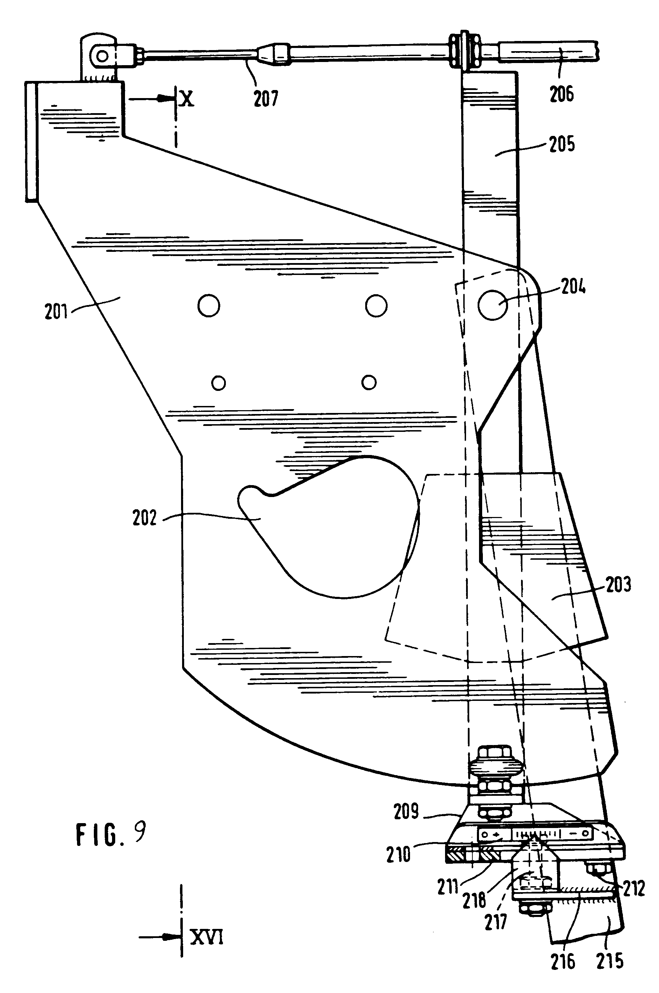

Fig. 9 zeigt eine linke Dosiereinheit eines Anbauschleuderstreuers, der bis auf die nachfolgend beschriebenen Unterschiede im wesentlichen mit den oben beschriebenen Schleuderstreuern übereinstimmt. An nicht gezeigten Behälterteilen sind mit Hilfe von Schnellverschlüssen lösbare Bodenplatten 201 befestigt. Unterhalb der jeweiligen Bodenplatten 201 ist jeweils ein als Schleuderscheibe ausgebildetes Verteilorgan angeordnet, das über ein Getriebe von der Schlepperzapfwelle angetrieben werden.

Die Bodenplatten 201 sind als Dosierorgane ausgebildet. In jeder Bodenplatte 201 befindet sich eine Auslauföffnung 202, deren Öffnungsweite durch einen unter der Bodenplatte 201 vor der Auslauföffnung 202 angeordneten Schieber 203 eingestellt werden kann. Dieser Schieber 203 ist um einen Bolzen 204 schwenkbar.

Ein Bedienungshebel 205 ragt nach vorn über den Bolzen 204 hinaus. An diesem Bedienungshebel 205 ist ein als Bedienungselement 206 ausgebildeter Bowdenzug 207 angeordnet. Über diesen Bowdenzug 207 ist der Bedienungshebel 205 mit einer auf einem Schlepper angeordneten Fernbedienungseinrichtung 208 verbunden. Hierdurch kann der Schlepperfahrer den Schieber 203 vom Schleppersitz aus betätigen.

Der Schieber 203 weist auf seiner dem Bedienungshebel 205 abgewandten Seite ein Verlängerungsstück 209 auf, an dem eine Einstellskala 210 angeordnet ist. Weiterhin ist in dem aufrechten Stück des Verlängerungsstückes 209 des Schiebers 203 eine Langlochführung angeordnet. An dem aufrechten Stück des Verlängerungsstückes 209 des Schiebers 203 ist ein Kunststoffteil 211 mit Schrauben 212 befestigt. Das Kunststoffteil 211 weist ebenfalls eine Langlochführubng 213 mit einer Rastkerbe 214 auf und ist derart ausgebildet, daß die Langlochführung 213 in Schließrichtung des Schiebers 203 offen ausgebildet ist. Die Langlochführung 213 des Kunststoffteiles 211 weist eine jeweils sich in Richtung auf die Mitte des Langloches vermindernde Breite auf. In diese Langlochführung 213 des Schiebers 203 ragt ein an dem an dem einstellbaren Arretierelement 215 angeschweißten Hebel 216 angeschraubtes Rastelement 217. Befindet sich jetzt das Rastelement 217 des einstellbaren Arretierelementes 215 in der Mitte der Langlochführung 213 des Schiebers 203, d.h., in der V-förmigen Rastkerbe 214, befindet sich der Schieber 203 in der durch das Arretierelement 215 eingestellten Grundeinstellung. Der am Hebel 216 des einstellbaren Arretierelementes 215 angeordnete Zeiger 218, der mit der Einstellskala 210 zusammenwirkt, befindet sich dann auch in seiner Grundstellung.

Die Grundeinstellung wird über das einstellbare Arretierelement 215, das mit einer am Vorratsbehälter angeordneten Einstellskala zusammenwirkt, vorgenommen. Diese Einstellskala weist eine lineare Teilung auf. Anhand dieser Einstellskala wird in Verbindung mit den Werten einer Streutabelle die Grundeinstellung vorgenommen.

Befindet sich das Rastelement 217 in der Rastkerbe 214 der Langlochführung 213 des Schiebers 203, so nimmt der Schieber 203 die Grundöffnungsstellung ein. Die Einstellskala 210 des Schiebers 203 weist die gleiche Teilung wie die am Vorratsbehälter angeordnete Einstellskala auf, d.h., wenn das einstellbare Arretierelement 215 um einen Teilstrich an der Behälterskala verstellt wird, so entspricht dies der Verstellung, als wenn der Schieber 203 um einen Teilstrich gegenüber der Einstellskala 210 verstellt wird.

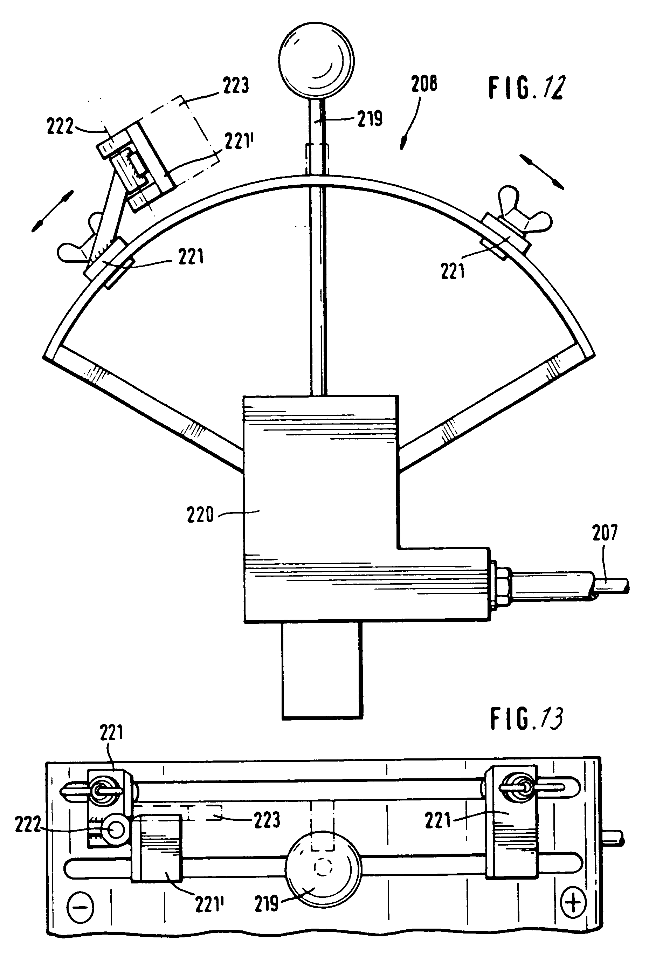

Die Betätigungshebel 219 der beiden Bowdenzüge 207 gemäß Fig. 12 und 13, wobei jeder Bowdenzug 207 der Dosiereinrichtung einer Schleuderscheibe zugeordnet ist, sind an einem gemeinsamen Betätigungsblock 220 angeordnet. An dem Betätigungsblock 220 sind einstellbaangeordnet, an denen die Hebel 219 der Bowdenzüge 205 zur Anlage kommen. Diese Anschläge 221 bestimmen die maximale und minimale Ausbringmenge des Schleuderstreuers und sind für die beiden Hebel 219 jeweils getrennt und unterschiedlich einstellbar. Der Anschlag 221 für die minimale Ausbringmenge ist derart ausgebildet, daß er durch Verschwenken um eine Achse 222 leicht in eine Außerfunktionsstellung 223 bringbar ist, so daß der Hebel 219 leicht an diesem Anschlag 221′ vorbeibewegbar ist, um den Schieber 203 in Schließstellung bringen zu können.

Im folgenden wird die Veränderung der Ausbringmenge pro Flächeneinheit während des Ausbringvorganges sowie das Einstellen eines maximalen und minimalen Ausbringmengenwertes gegenüber einer Grundausbringmenge geschildert:
Der Landwirt stellt zunächst das einstellbare Arretierelement 215 anhand einer Streutabelle ein. in der eingezeichneten Stellung gemäß Fig. 1 befindet sich der Schieber 203 in Öffnungsstellung. Der Schieber 203 gibt einen großen Querschnitt der Auslauföffnung 202 frei, was einer großen Ausbringmenge entspricht. Das Rastelement 217 des Arretierelementes 215 befindet sich in der Rastkerbe 214 der Langlochführung 213 und zeigt, daß sich der Schieber 203 in der Grundeinstellung befindet.

Um nun, ausgehend von dieser Grundeinstellung, die maximale bzw. die minimale Ausbringmeenge über den Schieber 203 verändern zu können und genau einzustellen, wird der Betätigungsblock 220 der Bowdenzüge 207 in eine Halterung der Vorratsbehälterrückseite eingesteckt. Anhand einer Streutabelle ermittelt der Landwirt, um wieviele Teilstriche der Einstellskala 210 der Schieber 203 verstellt werden muß, um ausgehend von der Grundeinstellung die maximale und die minimale Ausbringmenge einstellen zu können. Entsprechend der Differenz von Teilstrichen zwischen der Grundeinstellung und der maximalen bzw. der minimalen Ausbringmenge bewegt der Landwirt über den jeweiligen Betätigungshebel 219 des jeweiligen Bowdenzuges 207 den Schieber 203 so lange in Richtung größerer bzw. kleinerer Ausbringmengen, bis die Differenz von Teilstrichen ereicht ist. Dieses wird über die Skala 210 in Verbindung mit dem Zeiger 218 eingestellt. Wenn der Schieber 203 über den entsprechenden Betätigungshebel 219 des Bowdenzuges 207 soweit verschoben worden ist, daß die maximale bzw. die minimale Ausbringmenge gegenüber der Grundeinstellung erreicht ist, wird diese Stellung des Betätigungshebels 219 jeweils durch einen entsprechend einstellbaren Anschlag 221 festgelegt.

Wenn der Landwirt nun für die beiden Dosierorgane jeweils getrennt und unabhängig voneinander über die Betätigungshebel 219 der Bowdenzüge 207 die jeweilige maximale und minimale Ausbringmenge ausgehend von der Grundausbringmenge eingestellt hat, kann mit dem Ausbringen begonnen werden. Um nun vom Schlepper aus jeweils die maximale und minimale Ausbringmenge in bezug auf die Grundeinstellung vom Schleppersitz aus verstellen zu können, wird der Betätigungsblock 220 aus der Halterung der Vorratsbehälterrückwand herausgenommen und auf dem Schlepper angeordnet.

Dadurch, daß in der Grundeinstellung des Schiebers 203 das Rastelement 217 in die V-förmige Rastkerbe 214 einrastet, was beim Bewegen des jeweiligen Betätigungshebels 219 merklich zu spüren ist, kann der jeweilige Schieber 203 sicher in die Grundeinstellung zurückgestellt werden.

Über die jeweiligen Betätigungshebel 219 der Bowdenzüge 207 können die Schieber 203 jeweils unabhängig voneinander vom Schleppersitz aus verstellt werden, so daß für jede Schleuderscheibe verschieden große Ausbringmengen pro Flächeneinheit einstellbar sind.

Dadurch, daß die jeweiligen Schieber 203 jeweils unabhängig über die Betätigungshebel 219 der Bowdenzüge 207 verstellt werden können, ist es beispielsweise möglich, daß für die rechte Schleuderscheibe die maximale Ausbringmenge pro Flächeneinheit und für die linke Schleuderscheibe die minimale Ausbringmenge pro Flächeneinheit einstellbar ist. Es ist auch möglich, daß für die eine Schleuderscheibe die Grundausbringmenge eingestellt wird und für die andere Schleuderscheibe die maximale bzw. minimale Ausbringmenge pro Flächeneinheit eingestellt wird.

In der mit Hilfe des einstellbaren Arretierelements 215 eingestellten Grundeinstellung befindet sich der jeweilige Schieber 203 ebenfalls in der Grundeinstellung, wenn das Rastelement 217, das an dem kleinen Hebel 216 des einstellbaren Arretierelementes 215 angeordnet ist, sich in der V-förmigen Rastkerbe 214 der Langlochführung 213 des am Schieber 203 angeordneten Verlängerungsstückes 209 befindet. Dadurch, daß die Langlochführung 213 im Bereich der V-förmigen Rastkerbe 214 eine geringere Höhe als der Durchmesser des als Rastelement 217 ausgebildeten Rastbolzens aufweist, wird das Rastelement 217 durch die Elastizität des Kunststoffteiles 211 in die V-förmige Kerbe 214 gedrückt. Wird nun der Schieber 203 gegenüber dem einstellbaren Arretierelement 215 verstellt, so wird das Rastelement 217 aus der V-förmigen Kerbe 214 herausgedrückt und gleichzeitig wird der untere Teil des Kunststoffteiles unterhalb der Langlochführung 213 nach unten gedrückt, so daß das Kunststoffteil 211 elastisch verformt wird.

Auf dem Acker werden am Feldende die Auslauföffnungen 202 durch Betätigen der Betätigungshebel 219 des Betätigungsblockes 220 geöffnet. Durch die Betätigung des Betätigungshebels 219 erfolgt eine Verstellung des Schiebers 203 durch den am Bedienungshebel 205 des Schiebers 203 angeordneten Bowdenzuges 207. Der Betätigungshebel 219 wird so lange in die Öffnungsrichtung des Schiebers 203 bewegt, bis das Rastelement 217 des einstellbaren Elementes 215 in die V-förmige Rastkerbe 214 einrastet, was beim Bewegen des jeweiligen Betätigungshebels 219 merklich zu spüren ist. Jetzt befindet sich der Schieber 203 in der mit Hilfe des einstellbaren Arretierelementes 215 eingestellten Grundeinstellung. Wenn der Landwirt nun während der Feldüberfahrt und des Ausbringvorganges aufgrund der vorliegenden Einsatzverhältnisse eine etwas kleinere oder größere Ausbringmenge ausbringen will, so betätigt er den entsprechenden Betätigungshebel 219 des Bowdenzuges 207. Über diesen Bowdenzug 207 wird dann der jeweilige Schieber 203 bewegt, so daß entsprechend der Verstellung des Betätigungshebels 219 ein kleinerer oder ein größerer Öffnungsquerschnitt gegenüber der Grundeinstellung eingestellt wird. Soll anschließend wieder die Grundausbringmenge ausgebracht werden, so bewegt der Landwirt den entsprechenden Betätigungshebel 219 wieder zurück, bis er spürbar am Betätigungshebel merkt, daß das Rastelement 217 in die V-förmige Rastkerbe 214 der Langlochführung 213 des Schiebers 203 einrastet. Soll nun der Öffnungsquerschnitt der Auslauföffnung 202 verschlossen werden, muß der Landwirt den die minimale Ausbringmenge anzeigenden Anschlag 221′ in die Außerfunktionsstellung 223 bringen, so daß der Schieber 203 beim Betätigen des Betätigungshebels 219 über den Bowdenzug 207 in seine Schließstellung bringbar ist. Wird nun der Schieber 203 mit Hilfe des Betätigungshebels 219 wieder in seine Öffnungsstellung zurückgeführt, so muß der die minimale Ausbringmenge anzeigende Anschlag 221 wieder zurückgeschwenkt werden, so daß der Betätigungshebel 219 beim Einstellen der minimalen Ausbringmenge an diesem Anschlag 221 wieder zum Anliegen kommt. Somit läßt sich der durch den Schieber 203 freigegebene Öffnungsquerschnitt der Auslauföffnung 202 während des Einsatzes des Streuers über den Bowdenzug 207 als Teil der Fernbedienungsvorrichtung 208 derart verändern, daß jeweils unabhängig voneinander für jede Schleuderscheibe getrennt eine kleinere oder größere Ausbringmenge unabhängig voneinander einstellbar ist. Hierdurch wird also auf einfachste Weise erreicht, daß mit Hilfe nur eines Schiebers 203 pro Dosierorgan das Einstellen verschieden großer Öffnungsweiten der Auslauföffnung 202 bzw. das Schließen dieser Auslauföffnung erreicht wird.

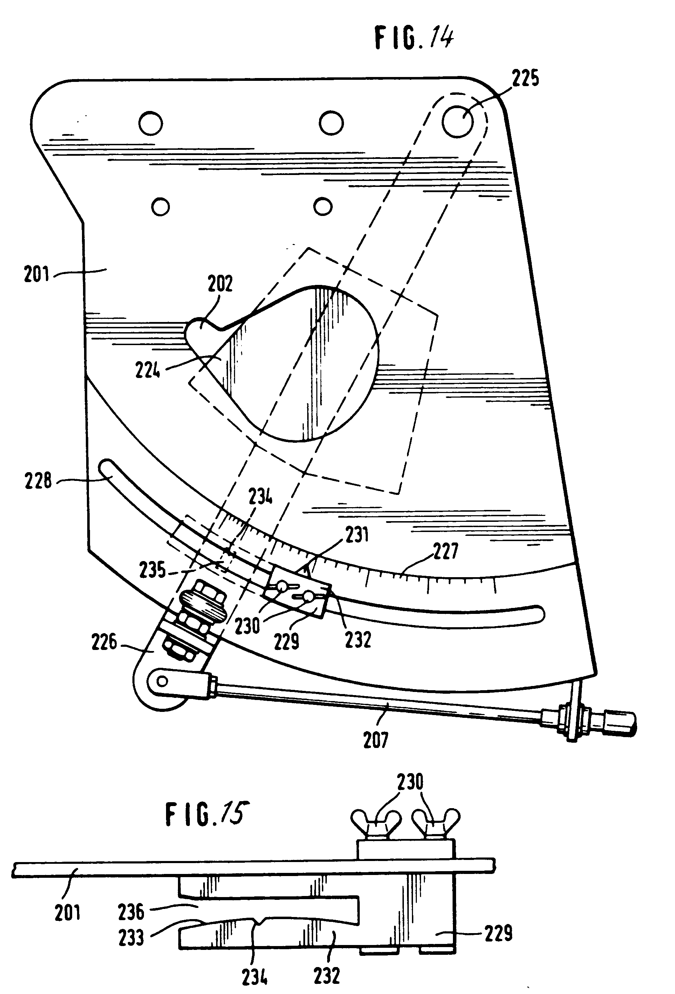

Die Fig. 14 zeigt ebenfalls eine Bodenplatte201, wobei die Einstellung der verschiedenen Ausbringmengen über eine vom vorherigen Ausführungsbeispiel abweichende Einstellungsvorrichtung erfolgt.

In der Bodenplatte 201 gemäß Fig. 14 befindet sich ebenfalls eine Auslauföffnung 202, deren Öffnungsweite durch einen unterhalb und vor der Auslauföffnung 202 angeordneten Schieber 224 eingestellt werden kann. Dieser Schieber 224 ist um einen Bolzen 225 schwenkbar und weist auf seiner dem Bolzen 225 abgewandten Seite ein Verlängerungsstück 226 auf, an dem der Bowdenzug 207 angelenkt ist. Über diesen Bowdenzug 207 wird der Schieber 224 mit der auf einem Schlepper angeordneten Fernbedienungseinrichtung 208 verbunden, so daß der Schieber 224 vom Schleppersitz aus verstellt werden kann.

Die Bodenplatte 201 weist an ihrem hinteren Ende eine Einstellskala 227 auf, die eine lineare Teilung aufweist. Vor der Einstellskala 227 befindet sich ein Langloch 228, in dem ein einstellbares Arretierelement 229 geführt und mit Schrauben 230 feststellbar ist. Dieses einstellbare Arretierelement 229 weist einen mit der Einstellskala 227 zusammenwirkenden Zeiger 231 auf. Das einstellbare Arretierelement 229 ist als Kunststoffteil 232 ausgebildet und weist eine Langlochführung 233 mit einer V-förmigen Rastkerbe 234 auf. Die Langlochführung 233 ist in Schließrichtung des Schiebers 224 offen ausgebildet, so daß der Schieber 224 in diese Langlochführung 233 eingreifen kann und auch wieder in seine Schließstellung zurückführbar ist, wobei der Schieber 224 eine Raste 235 aufweist, die mit der Rastkerbe 234 des einstellbaren Arretierelementes 229 zusammenwirkt (vgl. Fig. 15). Das Arretierelement 229 mit der Langlochführung 233 ist derart ausgebildet, daß das Langloch 236 in dem Bereich der Rastkerbe 234 eine Höhe aufweist, die kleiner als die Höhe der in das Langloch 236 eingreifenden Teile des Schiebers 224 ist.

Die Einstellung der Ausbringmenge wird über die Betätigungshebel 219 am Betätigungsblock 220 vorgenommen. Zur Einstellung der Grundausbringmenge befindet sich die Raste 235 des Schiebers 224 in der Rastkerbe 234 des einstellbaren Arretierelements 229. Der jeweilige Betätigungshebel 219 der Fernbedienungseinrichtung 208, die zum Einstellen der Ausbringmenge an der Behälterrückwand angeordnet werden kann, wird so lange bewegt, bis der Zeiger 231 des jetzt mit dem Schieber 224 zusammenwirkenden einstellbaren Arretierelemnts 229 den gewünschten, auf der Einstellskala 227 der Bodenplatte 201 ablesbaren Wert anzeigt. Dieser Wert stellt den Grundausbringmengenwert dar. Ausgehend von diesem Grundausbringmengenwert werden die jeweiligen minimalen und maximalen Ausbringmengenwerte festgelegt, wobei diese jeweiligen Ausbringmengenwerte durch die einstellbaren Anschläge 221 am Fernbedienungselement 208 eingestellt werden. An diesen Anschlägen 221 kommt der Betätigungshebel 219 jeweils zum Anliegen, wenn jeweils die minimale oder die maximale Ausbringmenge eingestellt werden soll. Jetzt wird der Zeiger 231 des einstellbaren Arretierelementes 229 durch Betätigung des Hebels 219 über den Bowdenzug 207 wieder auf den Grundausbringmengenwert zurückgestellt und das einstellbare Arretierelement 229 wird in dieser Stellung mit Hilfe der Schrauben 230 an der Bodenplatte 201 festgeklemmt. Nun kann mit dem Ausstreuen des Materials, wie bereits beschrieben, begonnen werden, wobei über nur einen Schieber 224 verschiedene Ausbringmengen durch Verändern der Öffnungsweite der Auslauföffnungen 202 einstellbar sind und sich die Auslaßöffnung auch mit diesem Schieber 224 auf einfachste Weise verschließen läßt.

## Patentansprüche

1. Schleuderstreuer, vorzugsweise Anbauschleuderstreuer, insbesondere für gekörnte Düngemittel, mit einem Vorratsbehälter (104) und einer Verteileinrichtung mit zumindest einem angetriebenen Verteilorgan, dem die auszubringenden Materialien über zumindest eine mit einer Schieberanordnung (112, 113; 203; 224) verschließbare und auf verschiedene Öffnungsweiten einstellbare Auslauföffnung (111, 202) zuführbar sind, wobei die Schieberanordnung (112, 113; 203; 224) mit Hilfe einer Fernbedienungsvorrichtung (116, 128; 207) in die Schließstellung und in Öffnungsstellungen bringbar ist, welche durch eine am Rahmen (106, 201) des Schleuderstreuers in unmittelbarer Nähe der Schieberanordnung (112, 113; 203; 224) angeordnete, mechanisch einstellbare Anschlageinrichtung derart festlegbar sind, daß sie beliebig oft fehlerlos durch die Schieberanordnung (112, 113; 203; 224) einnehmbar sind, **dadurch gekennzeichnet**, daß die Anschlageinrichtung als Rasteinrichtung (122, 135, 136; 214, 215, 217; 229, 234, 235) zur Festlegung einer Grundöffnungsstellung der Schieberanordnung (112, 113; 203; 224) ausgebildet ist und zusammenwirkende Elemente aufweist, die an der Schieberanordnung und am Rahmen (106, 201) des Schleuderstreuers angeordnet sind, und daß die Fernbedienungsvorrichtung (116, 128; 207) wenigstens einen vom Schleppersitz aus betätigbaren Betätigungshebel (138, 219) aufweist, dem zwei einstellbare Anschläge (140, 221) zugeordnet sind, die zwei zusätzliche Öffnungsstellungen der Schieberanordnung festlegen, wobei die Öffnungsweiten der Auslauföffnung (111, 202) in der einen zusätzlichen Öffnungsstellung größer und in der anderen kleiner als in der Grundöffnungsstellung sind.

2. Schleuderstreuer nach Anspruch 1, **dadurch** **gekennzeichnet**, daß die Rasteinrichtung (122, 135, 136; 214, 215, 217; 229, 234, 235) zwei zusammenwirkende Rastelemente (135, 136; 214, 217; 234, 235) und einen am Rahmen des Schleuderstreuers zur Festlegung der Grundöffnungsstellung verstell- und einstellbares, mit einem der Rastelemente (135; 217; 234) zusammenwirkendes Arretierelement (122; 215; 229) umfaßt.

3. Schleuderstreuer nach Anspruch 1 oder 2, **dadurch gekennzeichnet**, daß die Schieberanordnung als Einschieberanordnung mit einem Schieber (203, 224) ausgebildet und eines (214, 235) der beiden Rastelemente an diesem Schieber und das andere Rastelement (217, 234) am Arretierelement (215, 229) befestigt ist.

4. Schleuderstreuer nach Anspruch 3, **dadurch gekennzeichnet**, daß die Fernbedienungsvorrichtung den Betätigungshebel (219) und ein diesen mit dem Schieber (203, 224) verbindendes Bedienungselement (207) umfaßt.

5. Schleuderstreuer nach Anspruch 1 oder 2, **dadurch gekennzeichnet**, daß die Schieberanordnung als Doppelschieberanordnung mit einem ersten Schieber (112) und einem zweiten Schieber (113) ausgebildet ist, die relativ zueinander verstellbar sind und zur Festlegung der Öffnungsweite der Auslauföffnung (111) zusammenwirken, und daß eines (135) der Rastelemente am ersten Schieber (112) und das andere Rastelement (136) am zweiten Schieber (113) befestigt und der erste Schieber (112) in der Grundöffnungsstellung durch das Arretierelement (122) festgelegt ist.

6. Schleuderstreuer nach Anspruch 5, **dadurch gekennzeichnet**, daß der Betätigungshebel (138) über das Bedienungselement (128) mit dem zweiten Schieber (113) verbunden und ein zusätzliches Bedienungselement (116) zum Verstellen des ersten Schiebers (112) in die Schließ- und in die Grundöffnungsstellung vorgesehen ist.

7. Schleuderstreuer nach wenigstens einem der Ansprüche 4 bis 6, **dadurch gekennzeichnet**, daß das an dem Betätigungshebel (138, 219) angeschlossene Bedienungselement (128, 207) als Bowdenzug ausgebildet ist.

8. Schleuderstreuer nach Anspruch 6 oder 7, **dadurch gekennzeichnet**, daß der an dem Betätigungshebel (138) angeschlossene Bowdenzug (128) mit seinem Seil (129) am zweiten Schieber (112) angeschlossen und über seine Hülle (130) am ersten Schieber (112) abgestützt ist.

9. Schleuderstreuer nach wenigstens einem der Ansprüche 5 bis 8, **dadurch gekennzeichnet**, daß das Arretierelement (122) einen Anschlagbolzen (121) aufweist, an dem der erste Schieber (112) in der Grundöffnungsstellung anliegt.

10. Schleuderstreuer nach wenigstens einem der Ansprüche 2 bis 9, **dadurch gekennzeichnet**, daß das Arretierelement (122, 215, 229) an der die Auslauföffnung (111, 202) enthaltenden Bodenplatte (106, 201) des Schleuderstreuers angeordnet ist.

11. Schleuderstreuer nach wenigstens einem der Ansprüche 2 bis 10, **dadurch gekennzeichnet**, daß das Arretierelement (122, 215) als Arretierhebel schwenkbar an der Bodenplatte (106, 201) angeordnet ist.

12. Schleuderstreuer nach wenigstens einem der Ansprüche 2 bis 10, **dadurch gekennzeichnet**, daß das Arretierelement (229) als ein in einem Langloch (228) der Bodenplatte (201) verschiebbarer Arretierblock ausgebildet ist.

13. Schleuderstreuer nach wenigstens einem der Ansprüche 2 bis 12, **dadurch gekennzeichnet**, daß die Rastelemente (135, 136; 214, 217; 234, 235) als eine V-förmige Rastkerbe (135, 214, 234) und ein Rastbolzen (136, 217, 235) ausgebildet sind.

14. Schleuderstreuer nach Anspruch 13, **dadurch gekennzeichnet**, daß die V-förmige Rastkerbe (135, 214, 234) etwa im mittleren Bereich eines Langloches (132, 213, 233) ausgebildet ist.

15. Schleuderstreuer nach Anspruch 14, **dadurch gekennnzeichnet**, daß das Langloch (132, 213, 233) in einem Kunststoffelement (133, 211, 232) ausgebildet ist und im Bereich der Rastkerbe (135, 214, 234) eine Höhe aufweist, die kleiner als die Höhe des in das Langloch eingreifenden Rastelementes (136, 217, 235) ist.

16. Schleuderstreuer nach Anspruch 14 oder 15, **dadurch gekennzeichnet**, daß das Langloch eine Länge aufweist, die die Verstellung der Einschieberanordnung in die Schließstellung und die maximale Öffnungsstellung ermöglicht.

17. Schleuderstreuer nach Anspruch 14 oder 15, **dadurch gekennzeichnet**, daß das Langloch (213, 233) in Schließrichtung der Einschieberanordnung (203, 224) offen ist.

18. Schleuderstreuer nach Anspruch 14 oder 15, **dadurch** **gekennzeichnet**, daß das Langloch (132) eine Länge aufweist, die die Verstellung des zweiten Schiebers (113) der Doppelschieberanordnung (112, 113) in beide maximalen zusätzlichen Öffnungsstellungen ermöglicht.

19. Schleuderstreuer nach wenigstens einem der Ansprüche 2 bis 18, **dadurch gekennzeichnet**, daß die Rastelemente (135, 136; 214; 235) an Verlängerungsstücken (120, 127; 209; 226) der Schieber (112, 113; 203, 224) angeordnet sind.

20. Schleuderstreuer nach wenigstens einem der Ansprüche 1 bis 19, **dadurch gekennzeichnet**, daß der Betätigungshebel (138, 219) und die Anschläge (140, 221) an einem gemeinsamen Betätigungsblock (139, 220) angeordnet sind.

21. Schleuderstreuer nach Anspruch 20, **dadurch gekennzeichnet**, daß der Betätigungsblock (139, 220) an einer Halterung (141) befestigbar ist, die in dem Bereich, aus dem die Schieberanordnung (112, 113; 203; 224) einsehbar ist, am Schleuderstreuer angeordnet ist.

22. Schleuderstreuer nach wenigstens einem der Ansprüche 1 bis 21, **dadurch gekennzeichnet**, daß die Anschläge (140, 221) unabhängig voneinander einstellbar sind.

23. Schleuderstreuer nach wenigstens einem der Ansprüche 1 bis 22, **dadurch gekennzeichnet**, daß der die kleinste Öffnungsweite der Auslauföffnung (202) festlegende Anschlag (221) derart ausgebildet ist, daß der Betätigungshebel (219) zur Verstellung bis in die Schließstellung der Schieberanordnung (112, 113; 203; 224) leicht an diesem Anschlag (221) vorbeibewegbar ist.

24. Schleuderst reiner nach Anspruch 23, **dadurch gekennzeichnet**, daß der die kleinste öffnungsweite der Auslauföffnung (202) festlegende Anschlag (221) leicht in eine Außerfunktionsstellung (223) bringbar ist.

25. Schleuderstreiner nach wenigstens einem der Ansprüche 2 bis 24, **dadurch gekennzeichnet**, daß das Arretierelement (122) einen Zeiger aufweist, dem eine Einstellskala (126) mit linearer Teilung zugeordnet ist.

26. Schleuderstreiner nach wenigstens einem der Ansprüche 5 bis 25, **dadurch gekennzeichnet**, daß dem ersten Schieber (112) und dem zweiten Schieber (113) je eine Einstellskala (131) gleicher Teilung zugeordnet ist.

## Claims

1. Centrifugal broadcaster, preferably an attachable centrifugal broadcaster, more especially for granular fertilizers, including a hopper (104) and a distributing means, which is provided with at least one driven distributing member, the materials to be distributed being feedable to said distributing member via at least one outlet aperture (111, 202), which is closable by means of a slider arrangement (112, 113; 203; 224) and is adjustable to various widths of opening, the slider arrangement (112, 113; 203; 224) being able to be brought into the closed position and into open positions by means of a remote control device (116, 128; 207), such positions being definable by a mechanically adjustable stop means, which is disposed on the frame (106, 201) of the centrifugal broadcaster in the immediate vicinity of the slider arrangement (112, 113; 203; 224), in such a manner that such positions are often assumable as desired in an accurate manner by means of the slider arrangement (112, 113; 203; 224), characterised in that the stop means is provided as a locking means (122, 135, 136; 214, 215, 217; 229, 234, 235) for the securement of a basic open position of the slider arrangement (112, 113; 203; 224) and comprises co-operating members, which are disposed on the slider arrangement and on the frame (106, 201) of the centrifugal broadcaster, and in that the remote control device (116, 128; 207) has at least one actuating lever (138, 219), which is actuatable from the tractor seat and with which are associated two adjustable stop members (140, 221), which define two additional open positions of the slider arrangement, the widths of opening of the outlet aperture (111, 202) in one additional open position being greater than in the basic open position and such widths in the other additional open position being smaller than in the basic open position.

2. Centrifugal broadcaster according to claim 1, characterised in that the locking means (122, 135, 136; 214, 215, 217; 229, 234, 235) includes two co-operating locking members (135, 136; 214, 217; 234, 235) and an arresting member (122; 215; 229), which is displaceable and adjustable on the frame of the centrifugal broadcaster for the securement of the basic open position and co-operates with one of the locking members (135; 217; 234).

3. Centrifugal broadcaster according to claim 1 or 2, characterised in that the slider arrangement is formed as a single slider arrangement provided with one slider (203, 224), and one (214, 235) of the two locking members is mounted on this slider, and the other locking member (217, 234) is mounted on the arresting member (215, 229).

4. Centrifugal broadcaster according to claim 3, characterised in that the remote control device includes the actuating lever (219) and a control member (207), which connects said lever to the slider (203, 224).

5. Centrifugal broadcaster according to claim 1 or 2, characterised in that the slider arrangement is formed as a double slider arrangement provided with a first slider (112) and a second slider (113), which sliders are displaceable relative to each other and co-operate with each other for the securement of the width of opening of the outlet aperture (111), and in that one (135) of the locking members is mounted on the first slider (112), and the other locking member (136) is mounted on the second slider (113), and the first slider (112) is secured in the basic open position by the arresting member (122).

6. Centrifugal broadcaster according to claim 5, characterised in that the actuating lever (138) is connected to the second slider (113) via the control member (128), and an additional control member (116) is provided for the displacement of the first slider (112) into the closed position and into the basic open position.

7. Centrifugal broadcaster according to at least one of claims 4 to 6, characterised in that the control member (128, 207), which communicates with the actuating lever (138, 219), is a Bowden cable.

8. Centrifugal broadcaster according to claim 6 or 7, characterised in that the Bowden cable (128), which communicates with the actuating lever (138), communicates by a cable-wire (129) with the second slider (112) and is supported on the first slider (112) via its covering (130).

9. Centrifugal broadcaster according to at least one of claims 5 to 8, characterised in that the arresting member (122) has a stop pin (121), against which abuts the first slider (112) in the basic open position.

10. Centrifugal broadcaster according to at least one of claims 2 to 9, characterised in that the arresting member (122, 215, 229) is disposed on the base plate (106, 201) of the centrifugal broadcaster, which base plate contains the outlet aperture (111, 202).

11. Centrifugal broadcaster according to at least one of claims 2 to 10, characterised in that the arresting member (122, 215) is pivotably disposed on the base plate (106, 201) as an arresting lever.

12. Centrifugal broadcaster according to at least one of claims 2 to 10, characterised in that the arresting member (229) is provided as an arresting block which is displaceable in an elongate slot (228) in the base plate (201).

13. Centrifugal broadcaster according to at least one of claims 2 to 12, characterised in that the locking members (135, 136; 214, 217; 234, 235) are provided as a V-shaped locking groove (135, 214, 234) and a locking pin (136, 217, 235).

14. Centrifugal broadcaster according to claim 13, characterised in that the V-shaped locking groove (135, 214, 234) is provided substantially in the central region of an elongate slot (132, 213, 233).

15. Centrifugal broadcaster according to claim 14, characterised in that the elongate slot (132, 213, 233) is provided in a plastics material component (133, 211, 232) and, in the region of the locking groove (135, 214, 234), has a height which is smaller than the height of the locking member (136, 217, 235), which engages in the elongate slot.

16. Centrifugal broadcaster according to claim 14 or 15, characterised in that the elongate slot has a length which permits the displacement of the single slider arrangement into the closed position and into the maximum open position.

17. Centrifugal broadcaster according to claim 14 or 15, characterised in that the elongate slot (213, 233) is open in the closing direction of the single slider arrangement (203, 224).

18. Centrifugal broadcaster according to claim 14 or 15, characterised in that the elongate slot (132) has a length which permits the displacement of the second slider (113) of the double slider arrangement (112, 113) into both maximum additional open positions.

19. Centrifugal broadcaster according to at least one of claims 2 to 18, characterised in that the locking members (135, 136; 214; 235) are disposed on extension pieces (120, 127; 209; 226) of the sliders (112, 113; 203, 224).

20. Centrifugal broadcaster according to at least one of claims 1 to 19, characterised in that the actuating lever (138, 219) and the stop members (140, 221) are disposed on a common control block (139, 220).

21. Centrifugal broadcaster according to claim 20, characterised in that the control block (139, 220) is mountable on a mounting support (141), which is disposed on the centrifugal broadcaster in the region from which the slider arrangement (112, 113; 203; 224) can be inspected.

22. Centrifugal broadcaster according to at least one of claims 1 to 21, characterised in that the stop members (140, 221) are adjustable independently of each other.

23. Centrifugal broadcaster according to at least one of claims 1 to 22, characterised in that the stop member (221), which defines the smallest width of opening of the outlet aperture (202), is provided in such a manner that the actuating lever (219) is easily movable past this stop member (221) for the displacement of the slider arrangement (112, 113; 203; 224) into the closed position.

24. Centrifugal broadcaster according to claim 23, characterised in that the stop member (221), which defines the smallest width of opening of the outlet aperture (202), can easily be brought into an inoperative position (223).

25. Centrifugal broadcaster according to at least one of claims 2 to 24, characterised in that the arresting member (122) has a pointer, with which is associated a graduated scale (126) having linear graduations.

26. Centrifugal broadcaster according to at least one of claims 5 to 25, characterised in that the first slider (112) and the second slider (113) each have associated therewith a respective graduated scale (131) of identical graduations.

## Revendications

1. Distributeur centrifuge notamment distributeur centrifuge porté, en particulier pour des engrais en forme de granulés, comprenant un réservoir d'alimentation (104) et une installation de distribution avec au moins un organe de distribution entraîné qui reçoit les produits à distribuer par l'intermédiaire d'au moins un dispositif à disque (112, 113 ; 103, 124) susceptible d'être fermé, et réglable à différents degrés d'ouverture pour l'orifice de sortie (111, 202), le dispositif à tiroir (112, 113 ; 203, 224 étant mis dans la position de fermeture et dans les positions d'ouverture par un dispositif de télécommande (116, 128, 207), positions d'ouverture qui sont fixées par une installation de butée à réglage mécanique prévue sur le châssis (106, 201) du distributeur centrifuge, à proximité immédiate du dispositif à tiroir (112, 113, 203, 224), de façon à ce que le dispositif à tiroir (212, 213, 203, 224) puisse prendre ses positions, sans erreur, de manière aussi fréquente que voulu, caractérisé en ce que l'installation de butée est une installation d'encliquetage (122, 135, 136 ; 214, 215, 217 ; 229, 234, 235) pour fixer une position d'ouverture de base du dispositif à tiroir (112, 113 ; 203, 224) et comporte des éléments coopérants, prévus sur un dispositif à tiroir et sur le châssis (106, 201) du distributeur centrifuge et en ce que le dispositif de télécommande (116, 128 ; 207) comporte au moins un levier de manoeuvre (138, 219) actionné à partir du siège du conducteur, levier auquel sont associées deux butées réglables (140, 221) qui fixent deux positions d'ouverture supplémentaires du dispositif à tiroir, les degrés d'ouverture de l'orifice de sortie (111, 202) étant plus grand dans l'une des positions d'ouverture supplémentaires et plus petits dans l'autre, par rapport à la position d'ouverture de base.

2. Distributeur centrifuge selon la revendication 1, caractérisé en ce que le dispositif d'encliquetage (122, 135, 136 ; 214, 215, 217 ; 229, 234, 235) comporte deux éléments d'encliquetage correspondants (135, 136 ; 214, 217 ; 234, 235) et un élément de blocage déplaçable et réglable sur le châssis du distributeur centrifuge pour fixer la position d'ouverture de base, avec un élément de blocage (122 ; 215, 229) coopérant avec l'un des éléments d'accrochage (135 ; 217 ; 234).

3. Distributeur centrifuge selon la revendication 1 ou 2, caractérisé en ce que le dispositif à tiroir est en forme de montage à tiroir comprenant un tiroir (203, 224) et l'un des deux éléments d'accrochage (214, 235) est fixé sur ce tiroir, l'autre élément d'accrochage (217, 234) étant fixé sur l'élément de blocage (215, 229).

4. Distributeur centrifuge selon la revendication 3, caractérisé en ce que le dispositif de télécommande comprend le levier de manoeuvre (219) et un élément de liaison (207) reliant celui-ci au tiroir (203, 224).

5. Distributeur centrifuge selon la revendication 1 ou 2, caractérisé en ce que le montage à tiroir est un montage à double tiroir comprenant un premier tiroir (112) et un second tiroir (113), ces deux tiroirs étant réglables l'un par rapport à l'autre et coopèrent pour fixer le degré d'ouverture de l'orifice de sortie (111), l'un des éléments de blocage (135) étant prévu sur le premier tiroir (112) et l'autre élément de blocage (136) étant fixé sur le second tiroir (113), le premier tiroir (112) étant fixé dans la position d'ouverture de base par l'élément de blocage (122).

6. Distributeur centrifuge selon la revendication 5, caractérisé en ce que le levier de manoeuvre (138) est relié par l'élément de manoeuvre (128) au second tiroir (113) et un élément de manoeuvre supplémentaire (116) et prévu pour régler le premier tiroir (112) dans la position de fermeture et dans la position d'ouverture de base.

7. Distributeur centrifuge selon au moins l'une des revendications 4 à 6, caractérisé en ce que l'élément de manoeuvre (128, 207) relié au levier de manoeuvre (138, 219) est en forme de câble Bowden.

8. Distributeur centrifuge selon la revendication 6 ou 7, caractérisé en ce que le câble Bowden (128) relié au levier de manoeuvre (138) est fixé par un câble (129) au second tiroir (112) et sa gaine (130) est appuyée contre le premier tiroir (112).

9. Distributeur centrifuge selon au moins l'une des revendications 5 à 8, caractérisé en ce que l'élément de blocage (122) comporte un goujon de blocage (121) sur lequel s'appuie le premier tiroir (112) en position d'ouverture de base.

10. Distributeur centrifuge selon au moins l'une des revendications 2 à 9, caractérisé en ce que l'élément de blocage (122, 215, 229) est prévu sur la plaque de fond (106, 201) du distributeur, munie de l'orifice de sortie (111, 202).

11. Distributeur centrifuge selon au moins l'une des revendications 2 à 10, caractérisé en ce que l'élément de blocage (122, 215) est un levier de blocage monté pivotant sur la plaque de fond (106, 201).

12. Distributeur centrifuge selon au moins l'une des revendications 2 à 10, caractérisé en ce que l'élément de blocage (229) est un bloc coulissant dans un trou oblong de la plaque de fond (201).

13. Distributeur centrifuge selon au moins l'une des revendications 2 à 12, caractérisé en ce que les éléments d'accrochage (135, 136 ; 214, 217 ; 234, 235) sont constitués par une encoche d'encliquetage (135, 214, 234) en forme de V et d'un goujon d'encliquetage (136, 217, 235).

14. Distributeur centrifuge selon la revendication 13, caractérisé en ce que l'encoche d'encliquetage (135, 214, 234) en forme de V se trouve sensiblement au milieu d'un trou oblong (132, 213, 233).

15. Distributeur centrifuge selon la revendication 14, caractérisé en ce que le trou oblong (132, 213, 233) est formé par un élément en matière synthétique (133, 211, 232) et au niveau de l'encoche d'encliquetage (135, 214, 234) il a une hauteur inférieure à la hauteur de l'élément d'encliquetage (136, 217, 235) qui vient prendre dans le trou oblong.

16. Distributeur centrifuge selon la revendication 14 ou 15, caractérisé en ce que le trou oblong a une longueur qui permet le réglage du dispositif à un tiroir en position de fermeture et en position d'ouverture maximale.

17. Distributeur centrifuge selon la revendication 14 ou 15, caractérisé en ce que le trou oblong (213, 233) est ouvert en position de fermeture du dispositif à un tiroir (203, 224).

18. Distributeur centrifuge selon la revendication 14 ou 15, caractérisé en ce que le trou oblong (132) a une longueur qui permet de régler le second tiroir (113) d'un montage à deux tiroirs (112, 113) dans les deux positions d'ouverture maximale, supplémentaires.

19. Distributeur centrifuge selon au moins l'une des revendications 2 à 18, caractérisé en ce que les éléments d'accrochage (135, 136 ; 214, 235) sont prévus sur des pièces de prolongement (120, 127, 209, 226) des tiroirs (112, 113, 203, 224).

20. Distributeur centrifuge selon au moins l'une des revendications 1 à 19, caractérisé en ce que le levier de manoeuvre (138, 219) et les butées (140, 221) sont prévus sur un bloc de manoeuvre (139, 220) commun.

21. Distributeur centrifuge selon la revendication 20, caractérisé en ce que le bloc de manoeuvre (139, 220) peut se fixer sur un support (141) prévu dans une zone du distributeur centrifuge qui permet de voir le dispositif à tiroir (112, 113 ; 203 ; 224).

22. Distributeur centrifuge selon au moins l'une des revendications 1 à 21, caractérisé en ce que les butées (140, 221) sont réglables indépendamment l'une de l'autre.

23. Distributeur centrifuge selon au moins l'une des revendications 1 à 22, caractérisé en ce que la butée (221) qui fixe la plus petite ouverture de l'orifice de sortie (202) est conçue pour que le levier de manoeuvre (219) puisse passer facilement sur la butée (221) pour être réglé jusque dans la position de fermeture du dispositif à tiroir (112, 113 ; 203 ; 224).

24. Distributeur centrifuge selon la revendication 23, caractérisé en ce que la butée (221) qui fixe la plus petite ouverture de l'orifice de sortie (202) peut être mise facilement dans une position hors service (223).

25. Distributeur centrifuge selon au moins l'une des revendications 2 à 24, caractérisé en ce que l'élément de blocage (122) comporte un index associé à une échelle de réglage (126) à subdivision linéaire.

26. Distributeur centrifuge selon au moins l'une des revendications 5 à 25, caractérisé en ce qu'une échelle de réglage (131) respective, de même subdivision est associée au premier tiroir (112) et au second tiroir (113).
